# EUROPEAN PATENT APPLICATION

(11) **EP 1 126 443 A1**
(43) Date of publication of application: **22.08.2001**
(21) Application number: 01102877.6
(22) Date of filing: 14.02.2001
(51) Int. Cl.: G11B 5/86

(54) **Master medium for magnetic transfer including resin substrate integrally molded with microrelief or microrecess pattern**

(30) Priority: 15.02.2000 JP 2000036922; 20.12.2000 JP 2000387302
(71) Applicant: FUJI PHOTO FILM CO., LTD., Kanagawa-ken, 250-01 (JP)
(72) Inventor: Nishikawa, Masakazu, Odawara-shi, Kanagawa-ken (JP); Watanabe, Seiichi, Odawara-shi, Kanagawa-ken (JP)
(74) Representative: HOFFMANN - EITLE

(57) **Abstract**

A master medium for use in magnetic transfer of information to a magnetic recording medium. The master medium includes a resin substrate which is integrally molded with a microrelief or microrecess pattern being formed on a surface of the substrate and representing the information; and a magnetic layer formed on the microrelief or microrecess pattern. Preferably, the substrate and the microrelief or microrecess pattern are formed by injection molding using an original plate having a microrecess or microrelief pattern, or the 2P method using the original plate and an ultraviolet-curing resin.

## Description

### BACKGROUND OF THE INVENTION

### Field of the Invention

The present invention relates to a master medium which bears information, and is used in a process for magnetically transferring the information from the master medium to a slave medium. The present invention also relates to a process for magnetically transferring information from a master medium to a slave medium. The present invention further relates to a magnetic recording medium in which information is recorded by magnetically transferring the information from a master medium to the magnetic recording medium.

### Description of the Related Art

Recently, the amount of information which is required to be handled and stored is increasing. Therefore, there are demands for an inexpensive magnetic recording medium which can store a large amount of information, and be preferably accessed at high speed so that an arbitrary portion of information can be read out quickly. The high-density flexible disk is known as an example of such a magnetic recording medium. The so-called tracking servo technique plays an important role in realizing a high-density flexible disk having great capacity. Due to the tracking servo technique, a magnetic head can move precisely within a narrow track width, and a signal can be regenerated with a high S/N ratio. A so-called preformat including a tracking servo signal, an address information signal, a regeneration clock signal, and the like is recorded on the track of the disk so that the signals constituting the preformat appear at predetermined intervals during each rotation of the disk.

The magnetic head is arranged so that the magnetic head can move precisely on the track by reading the signals in the preformat and correcting its own position. Conventionally, the preformat is produced by recording the signals on each disk on a track-by-track basis by using a dedicated servo recording apparatus. However, it takes a long time to record the preformat by using the servo recording apparatus. Therefore, the cost of the preformat recording forms a considerable proportion of the total manufacturing cost, and thus reduction of the preformat recording cost is required.

On the other hand, Japanese Unexamined Patent Publications Nos. 63 (1988)-183623, 10 (1998)-40544, and 10 (1998)-269566 disclose techniques of recording a preformat by magnetic transfer, instead of recording signals constituting the preformat on the track-by-track basis.

JUPP 63 (1988)-183623 and JUPP 10 (1998)-40544 disclose methods of recording magnetization patterns corresponding to information signals 'on a magnetic recording medium (as a slave medium). In the disclosed methods, a master medium is prepared for magnetic transfer. The master medium is produced by forming relieved portions having shapes corresponding to the information signals on a surface of a substrate, and further forming a thin magnetic film at least on the relieved portions of the substrate. The slave medium has the form of a sheet or disk, and includes a thin ferromagnetic film or a magnetic-powder layer. The magnetic transfer is achieved by placing the slave medium in close contact with the magnetic film of the master medium, and applying an AC or DC bias magnetic field to the master medium so as to excite the magnetic material (thin film) formed on the relieved portions of the master medium. Thus, the magnetization patterns corresponding to the relieved portions of the master medium are recorded on the slave medium.

Since, according to the above methods of recording magnetization patterns by magnetic transfer, the relieved portions of the master medium are placed in close contact with the slave medium which is to be preformatted, and the magnetic material on the relieved portions are concurrently excited so as to record the predetermined patterns on the slave medium, the patterns can be statically recorded on the slave medium without changing the relative positions of the master medium and the slave medium. Thus, the preformat can be precisely recorded, and the time needed for the preformatting is very short.

However, when the above methods of recording magnetization patterns by magnetic transfer are used for recording servo signals on a magnetic recording medium (as a slave medium), it is necessary to precisely form servo patterns at respectively appropriate positions over the entire area of a magnetic recording medium, where the servo patterns each have a size of the order of one micrometer or less. For example, the 3.5-inch and 2.5-inch magnetic recording mediums have diameters of 3.5 and 2.5 inches, respectively. Since the servo patterns respectively indicate addresses of information items, the respective servo patterns must be different.

Micropatterns as mentioned above can be recorded by the lithography techniques which are conventionally used in manufacturing semiconductor devices or magnetic heads. However, in the lithography techniques, an original image is reduced in order to increase accuracy. Therefore, the area which can be exposed by one exposing operation is limited to about 2 cm square. When a large-size pattern is recorded by repeating the exposure of the 2 cm square, the large-size pattern includes an array of identical patterns. That is, it is difficult to form the servo patterns on a magnetic recording medium by using the above lithography techniques since the servo patterns are respectively different.

In addition, in the methods of recording magnetization patterns by magnetic transfer, the master medium is placed in close contact with the slave medium during the magnetic transfer operation. Therefore, when the magnetic transfer operation is performed a number of times, the relieved patterns representing information wear down, and therefore the accuracy of the magnetic transfer decreases. Further, when dust exists between the master medium and the slave medium, the dust may scratch the surfaces of the relieved portions of the master medium. In these cases, the master medium must be replaced. Therefore, it is desirable that the master medium is easy to produce, and inexpensive. However, the production of the master medium by repetition of the micropattern exposure requires complicated quality control operations, and is disadvantageous in qualitative stability and production cost.

### SUMMARY OF THE INVENTION

An object of the present invention is to provide a master medium for use in magnetic transfer, which is inexpensive and easy to produce.

Another of the present invention is to provide a process for magnetically transferring information to a magnetic recording medium by using a master medium which is inexpensive and easy to produce.

A further object of the present invention is to provide a slave medium which is inexpensive and easy to produce.

(1) According to the first aspect of the present invention, there is provided a master medium for use in magnetic transfer of information to a magnetic recording medium. The master medium comprises a substrate which is made of resin, and integrally molded with a microrelief or microrecess pattern being formed on a surface of the substrate and representing the above information, and a magnetic layer formed on the microrelief or microrecess pattern.

The master medium according to the first aspect of the present invention may also have one or any possible combination of the following additional features (i) to (iv).
(i) The substrate and the microrelief or microrecess pattern may be formed by injection molding using an original plate having a microrecess or microrelief pattern.
(ii) The substrate and the microrelief or microrecess pattern may be formed by a 2P method using an ultraviolet-curing resin and an original plate having a microrecess or microrelief pattern.
   The 2P method using an ultraviolet-curing resin is a well known photopolymerization method. According to this method, a resin solution containing an ultraviolet-curing resin is applied to the original plate, and is then cured (photopolymerized) by exposure to ultraviolet light so that the cured resin has a shape corresponding to the microrecess or microrelief pattern of the original plate.
(iii) The above information may be a servo signal.
(iv) The surface of the substrate opposite to the microrelief or microrecess pattern may be supported by a holder.

Since the substrate of the master medium according to the first aspect of the present invention is made of resin, and integrally molded with a microrelief or microrecess pattern, the master medium used in magnetic transfer of information signals (such as servo signals) to a magnetic recording medium can be produced at low cost with a desired accuracy. In particular, a great number of identical resin substrates can be produced by injection molding or the 2P method using one original plate. Therefore, the qualitative stability of the magnetic transfer can be maintained by timely replacing the master medium in response to increase in the number of the magnetic transfer operations.

For example, the substrate of the master medium is produced as follows.

While rotating a glass plate coated with a photoresist, laser light or an electron beam modulated with information such as the servo signals is applied to the glass plate so that portions of the entire surface of the photoresist on the glass plate, which constitute a predetermined pattern, are exposed to the modulated laser light or an electron beam. Next, the above portions of the photoresist exposed to the modulated laser light or an electron beam are removed by development, and portions of the glass plate which are exposed by the removal of the photoresist portions are etched so as to form a microrecess pattern (negative pattern) on the glass plate. Then, the remaining portions of the photoresist are removed, and plating processing and electroforming processing are performed by using the glass plate etched as above in order to produce a mother plate having a microrelief pattern (positive pattern). In the case where the substrate has a microrecess pattern, this mother plate is used as the original plate. Alternatively, when the 2P method is used, the glass plate etched as above can be used as the original plate. When the above glass plate or mother plate is not used as the original plate, further electroforming processing is performed on the mother plate in order to produce a plated original plate (as a stamper) having a microrecess pattern (negative pattern). Alternatively, the plated original plate may be produced by performing plating processing and electroforming processing immediately on the glass plate after the developing process of the photoresist.

Thereafter, a resin molding is produced by the 2P method or the like using one of the above original plates having a microrelief or microrecess pattern (positive or negative pattern) . This resin molding is used as the substrate of the master medium for magnetic transfer. The microrelief or microrecess pattern on the surface of the master medium can be transferred to a magnetic recording medium. When the substrate of the master medium is produced as above, a microrelief or microrecess pattern having a size of the order of one micrometer or less can be formed at arbitrary position on the entire surface of the magnetic recording medium. For example, when the above microrelief or microrecess pattern of the substrate is coated with a magnetic layer having a predetermined thickness by sputtering or the like, a master medium which bears information to be magnetically transferred, in the form of a microrelief or microrecess pattern of magnetic material, is obtained. In addition, a great number of resin substrates (for master mediums) can be produced by using one original plate. Further, the above glass plate and mother plate can also be used repeatedly.

It is preferable that the resin constituting the substrate has the Young's modulus of 1.5 X 10⁵ Pa or greater. It is further preferable that the Young's modulus of the substrate is 2.5 X 10⁵ Pa or greater. In addition, preferably, the thickness of the resin substrate is 0.3 to 1.2 mm (more preferably 0.5 to 1.0 mm) when the substrate is formed by injection molding, and 30 to 80 micrometers (more preferably 40 to 60 micrometers) when the substrate is formed by the 2P method.

(2) The magnetic transfer is achieved by placing the slave medium in contact with the microrelief or microrecess pattern of the master medium, and applying a magnetic field to the master medium for transferring the information represented by the microrelief or microrecess pattern to the slave medium. For example, according to the second aspect of the present invention, there is provided a process for magnetically transferring information from a master medium to a magnetic recording medium. The process comprises the steps of: (a) performing an initial direct-current magnetization of the magnetic recording medium in a first direction; (b) placing the master medium and the magnetic recording medium so that the magnetic recording medium is in contact with a magnetic layer formed on a microrelief or microrecess pattern of the master medium; and (c) applying to the master medium a magnetic field in a second direction approximately opposite to the first direction. The master medium comprises a substrate which is made of resin, and integrally molded with the microrelief or microrecess pattern.

Regardless of whether the microrelief or microrecess pattern of the resin substrate is a true copy or a reverse copy of the microrecess pattern formed on the aforementioned glass plate (i.e., regardless of whether the pattern formed on the resin substrate is a microrelief pattern or a microrecess pattern), the pattern formed on the magnetic recording medium is magnetized in the same way when the directions of the initial magnetization of the magnetic recording medium and the magnetic field applied to the master medium for magnetic transfer are inverted accordingly.

The master medium used in the process according to the second aspect of the present invention may also have one or any possible combination of the aforementioned additional features (i) to (iv).

(3) According to the third aspect of the present invention, there is provided a magnetic recording medium on which information is recorded, where the information is magnetically transferred from a master medium to the magnetic recording medium, the master medium comprises a substrate which is made of resin, and integrally molded with a microrelief or microrecess pattern, and the microrelief or microrecess pattern represents the above information.

The master medium used in transferring information to the magnetic recording medium according to the third aspect of the present invention may also have one or any possible combination of the aforementioned additional features (i) and (iv).

### DESCRIPTION OF THE DRAWINGS

Figs. 1A to 1C are cross-sectional views of the first to third stages in a process of magnetically transferring information from a master medium to a slave medium, as the first embodiment of the present invention.

Figs. 2A to 2I are cross-sectional views of representative stages in a process of producing a substrate of a master medium by injection molding.

Fig. 3 is a cross-sectional view of the first stage in a process of producing a substrate of a master medium by the 2P method.

Fig. 4 is a cross-sectional view of the second stage in the process of Fig. 3.

Fig. 5 is a cross-sectional view of the master medium formed by the 2P method.

### DESCRIPTION OF PREFERRED EMBODIMENTS

Embodiments of the present invention are explained in detail below with reference to drawings. In the drawings, elements are illustrated schematically, and dimensions of the illustrations are different from the dimensions of the elements of actual master mediums and slave mediums.

### Magnetic Transfer Process

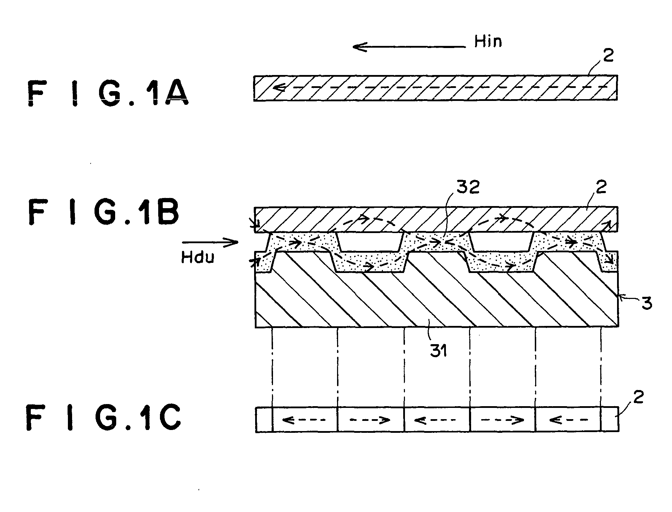

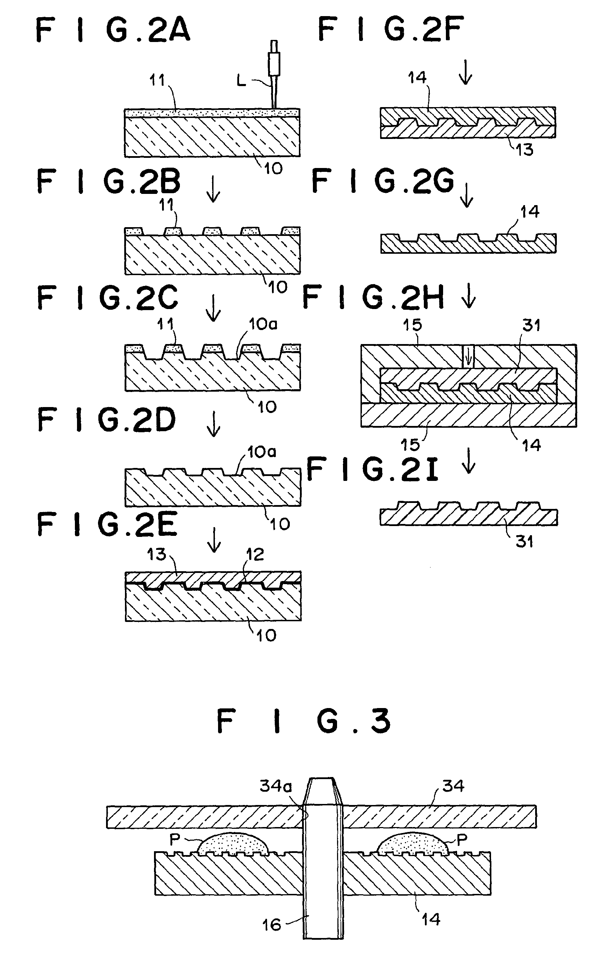

Figs. 1A to 1C are cross-sectional views of the first to third stages in a process of magnetically transferring information from a master medium to a slave medium, as the first embodiment of the present invention.

The outline of the magnetic transfer process is as follows.

First, as illustrated in Fig. 1A, initial magnetization (direct-current demagnetization) is performed on a slave medium 2 by applying to the slave medium 2 an initial static magnetic field Hin in a direction along a track of the slave medium 2. Thereafter, as illustrated in Fig. 1B, the slave medium 2 and a master medium 3 are placed so that the magnetic transfer surface of the slave medium 2 is in close contact with information-bearing surfaces of the master medium 3, where the information-bearing surfaces are surfaces of a magnetic layer 32 formed on relieved portions of a microrelief or microrecess pattern of a resin substrate 31. Then, a transfer magnetic field (i.e., magnetic field for magnetic transfer) Hdu is applied to the magnetic layer 32 in the direction opposite to the direction of the initial static magnetic field Hin along the direction of the track of the slave medium 2. As a result, as illustrated in Fig. 1C, a pattern formed with the relieved portions of the master medium 3 and spaces above the recessed portions of the master medium 3 is magnetically transferred to the magnetic transfer surface (track) of the slave medium 2, and a magnetization pattern is recorded in the slave medium 2.

The resin substrate 31 of the master medium 3 is produced by resin molding, for example, by injection molding or the 2P method using an original plate having a microrelief or microrecess pattern as explained later. The microrelief or microrecess pattern is formed concurrently (i.e., integrally) with the other portion of the substrate. The surface of the substrate 31 opposite to the microrelief or microrecess pattern is supported by a holder, as necessary.

Even when the microrelief or microrecess pattern of the resin substrate is a pattern reverse to the microrelief or microrecess pattern of Fig. 1B, the same magnetization pattern as that of Fig. 1C can be realized by inverting the directions of the initial static magnetic field Hin and the transfer magnetic field Hdu.

### Production of Substrate of Master Medium

A process of producing a substrate of a master medium by injection molding is explained below with reference to Figs. 2A to 2I, which are cross-sectional views of representative stages in the process.

In the stages of Figs. 2A to 2E, an original plate (stamper) is produced. First, a photoresist solution is applied to a smooth surface of a glass (or quartz) plate 10 by spin coating or the like so as to form a photoresist film 11. While rotating the glass plate 10 coated with the photoresist film 11, laser light (or an electron beam) L modulated with servo signals is applied to the photoresist film 11 so that portions of the entire surface of the photoresist film 11, corresponding to predetermined preformat patterns which represent to the servo signals, are exposed to the modulated laser light or an electron beam. For example, each preformat pattern is a pattern comprised of lines being located at a position corresponding to each frame, radially extending across each track, and representing the servo signals.

Thereafter, the above portions of the photoresist which are exposed to the laser light L are removed by development, as illustrated in Fig. 2B. Next, in the etching stage, portions of the glass plate 10 which are exposed by the removal of the exposed portions of the photoresist are etched so as to form depressions 10a corresponding to the preformat patterns, as illustrated in Fig. 2C. Then, the remaining portions of the photoresist are removed. Thus, the glass plate 10 having a microrecess pattern formed with the depressions 10a is obtained as illustrated in Fig. 2D.

Next, as illustrated in Fig. 2E, a thin silver plating layer 12 is formed on the microrecess pattern formed on the glass plate 10, and electroforming processing is performed on the plated glass plate 10 in order to form a mother plate 13 having a microrelief (positive) pattern. When the thickness of the mother plate 13 reaches a predetermined value, the mother plate 13 is removed from the glass plate 10. Then, electroforming processing is performed on the mother plate 13 as illustrated in Fig. 2F in order to form a plated original plate (stamper) 14 having a microrecess (negative) pattern. Thereafter, the plated original plate 14 is removed from the mother plate 13.

A resin substrate 31 is formed by injection molding using the plated original plate 14. For example, as illustrated in Fig. 2H, the plated original plate 14 is set in a form die 15 which is closable and openable, and a resin substrate 31 having a microrelief (positive) pattern corresponding to the microrecess (negative) pattern on the plated original plate 14 is formed by injecting resin into the closed form die 15. After the resin substrate 31 is cooled, the resin substrate 31 is released from the form die 15. Thus, the resin substrate 31 is obtained as illustrated in Fig. 2I. The microrelief pattern on the resin substrate 31 is reverse to the microrelief pattern on the glass plate 10. In addition, the microrelief pattern can be formed at arbitrary position on the resin substrate 31 with an accuracy of one micrometer or less. A master medium 3 is formed by coating a magnetic layer 32 on the microrelief or microrecess pattern of the resin substrate 31.

In a variation of the process of Figs. 2A to 2I, the glass plate 10 is not etched. Instead, the mother plate 13 is formed by performing silver plating and electroforming on the remaining portions of the photoresist and the exposed surface portions of the glass plate 10 after the stage of Fig. 2B. Thereafter, the plated original plate 14 having a microrecess (negative) pattern can be obtained by the electroforming processing in the stage of Fig. 2F.

In another variation of the process of Figs. 2A to 2I, the plated original plate 14 is not produced, and the mother plate 13 is used as an original plate in the stage of Fig. 2H. Since the mother plate 13 has a microrelief (positive) pattern, the resin substrate 31 produced in the stage of Fig. 2H has a microrecess (negative) pattern which is identical to the microrecess pattern of the glass plate 10. The master medium 3 is formed by coating the microrecess pattern of the resin substrate 31 with a magnetic layer 32. As mentioned before, when the microrecess pattern on the master medium 3 formed as above is magnetically transferred from the master medium 3 to a magnetic recording medium, the same magnetization pattern as that of Fig. 1C can be recorded on the magnetic recording medium by inverting the directions of the initial static magnetic field Hin (illustrated in Fig. 1A) and the transfer magnetic field Hdu (illustrated in Fig. 1B).

The materials used in the electroforming operations of the plated original plate 14 and the mother plate 13 may be Ni or a Ni alloy. In order to increase durability of the plated original plate 14 and the mother plate 13, a protection film made of sputter carbon, diamond-like carbon (DLC), or the like may be formed so as to cover the microrecess and microrelief patterns of the plated original plate 14 and the mother plate 13.

A plurality of resin substrates 31 can be produced by using the above plated original plate 14 or the mother plate 13 as an original plate. In addition, a plurality of plated original plates 14 can be produced by repeatedly using the glass plate 10 and the mother plate 13.

The resin material used in the injection molding of the resin substrate 31 may be an acrylic resin such as polycarbonate and polymethylmethacrylate, a vinyl chloride resin such as polyvinyl chloride and vinyl chloride copolymer, epoxy resin, amorphous polyolefine, polyester, or the like. In particular, polycarbonate is advantageous in its moisture resistance, dimensional stability, price, and the like. When the resin substrate 31 has a burr, the burr is eliminated by burnishing or polishing the resin substrate 31. The height of the relieved portions is preferably 50 to 1,000 nm, and more preferably 200 to 500 nm. The thickness of the resin substrate 31 is preferably 0.3 to 1.2 mm, and more preferably 0.5 to 1.0 mm.

The magnetic layer 32 is formed with a magnetic material by plating, vacuum deposition film formation, or the like. For example, the vacuum film formation includes vacuum evaporation, sputtering, and ion plating. The magnetic material used in the magnetic layer 32 may be Co, a Co alloy (such as CoNi, CoNiZr, and CoNbTaZr), Fe, a Fe alloy (such as FeCo, FeCoNi, FeNiMo, FeAlSi, FeAl, and FeTaN), Ni, and a Ni alloy (such as NiFe). In particular, FeCo and FeCoNi are preferable. The thickness of the magnetic layer 32 is preferably 50 to 500 nm, and more preferably 100 to 300 nm. Further, it is possible to provide a non-magnetic base layer between the magnetic layer 32 and the substrate. The non-magnetic base layer may be made of Cr, CrTi, CoCr, CrTa, CrMo, NiAl, Ru, C, Ti, Al, Mo, W, Ta, Nb, or the like.

Furthermore, it is preferable to provide a protection film made of diamond-like carbon (DLC) or the like on the magnetic layer 32. In addition, it is possible to provide a lubricant layer. More preferably, both of the lubricant layer and the DLC protection layer having a thickness of 5 to 30 nm are provided. When the slave medium 2 comes into contact with the master medium 3, a deviation may occur from perfect alignment. When the deviation is corrected, friction arises between the slave medium 2 and the master medium 3. For example, durability of the master medium 3 may deteriorate due to a flaw produced on the surface of the magnetic layer 32 by the friction. The lubricant layer can prevent deterioration in durability due to friction.

The slave medium 2 may be a high-density flexible disk, a hard disk, or the like. The magnetic recording layer of the slave medium 2 may be formed by application or with a thin metal film. The magnetic material may be Co, a Co alloy (such as CoPtCr, CoCr, CoPtCrTa, CoPtCrNbTa, CoCrB, and CoNi), Fe, or a Fe alloy (such as FeCo, FePt, and FeCoNi).

### Production of Substrate by 2P Method

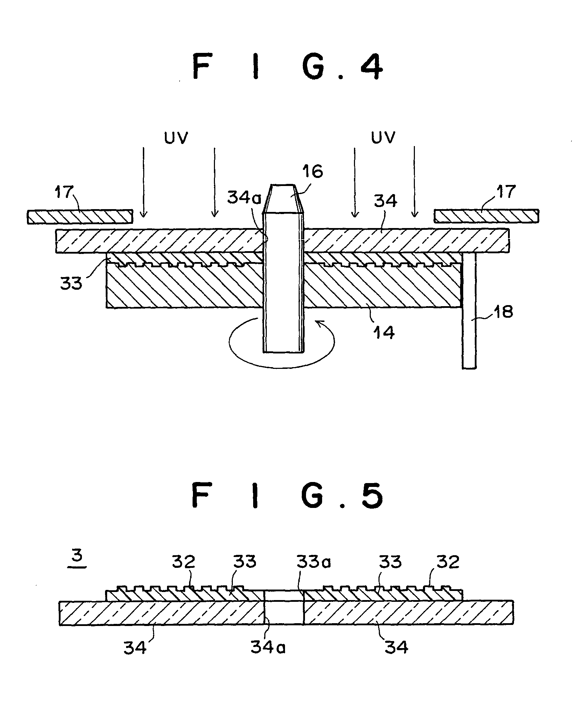

Figs. 3 to 5 are cross-sectional views of the first to third stages in a process of producing a substrate of a master medium by the 2P method in the second embodiment. The 2P method is a photopolymerization formation method using an ultraviolet-curing resin. The aforementioned plated original plate 14 formed in the process of Figs. 2A to 2G can also be used as an original plate in 2P method. An axle 16 is fixed to the center of the plated original plate 14, and linked to a rotation mechanism (not shown) so that the plated original plate 14 can be rotated. The upper portion of the axle 16 protrudes above the plated original plate 14, and the top end of the axle 16 is tapered.

First, an ultraviolet-curing resin solution P is applied to the microrecess (or microrelief) pattern on the plated original plate 14, and is then pressed with a support disk 34 having a central bore 34a, by sliding the support disk 34 onto the axle 16, so that the ultraviolet-curing resin solution P spreads over the entire surface of the plated original plate 14 with a thickness of 30 to 80 micrometers. The support disk 34 is made of a material which is transparent to ultraviolet light, e.g., glass, PMMA (polymethyl methacrylate), or the like. The thickness of the support disk 34 is 3 to 10 mm. After the substrate is formed, the support disk 34 becomes a part of the master medium 3 as illustrated in Fig. 5.

Next, as illustrated in Fig. 4, the ultraviolet-curing resin solution P spread over the entire surface of the plated original plate 14 is irradiated with ultraviolet light UV emitted from a light source (not shown) located above the arrangement of Fig. 4, while pressing the ultraviolet-curing resin solution P with the support disk 34, and rotating the plated original plate 14 and the support disk 34 around the axle 16. Thus, the ultraviolet-curing resin solution P is cured by photopolymerization so as to form a resin substrate 33. The above arrangement is rotated in order to uniformly cure the resin. In addition, a wiper 18 is placed in contact with the peripheral edge of the plated original plate 14 in order to wipe off excessive resin solution squeezed out from the peripheral edge of the plated original plate 14, and prevent dripping of the excessive resin. Further, a peripheral mask 17 is arranged above the peripheral edge of the plated original plate 14 in order to prevent curing of the excessive resin solution squeezed out from the peripheral edge of the plated original plate 14.

After the ultraviolet-curing resin solution P is irradiated with ultraviolet light for a predetermined time, and sufficiently cured to form the resin substrate 33, the resin substrate 33 is removed from the plated original plate 14, for example, by tapping out the resin substrate 33 from the plated original plate 14 with some tool. The resin substrate 33 has the form of a disk having a central bore 33a, which is formed due to the existence of the axle 16. The microrelief (or microrecess) pattern on the resin substrate 33 is integrally formed with the disk portion of the resin substrate 33. The master medium 3 as illustrated in Fig. 5 is obtained by coating the microrelief (or microrecess) pattern with a magnetic layer 32. In the master medium 3 of Fig. 5, the aforementioned support disk 34 is coupled to the back surface of the resin substrate 33 (opposite to the surface having the microrelief or microrecess pattern).

The thickness of the resin substrate 33 produced by the 2P method is preferably 30 to 80 micrometers, and more preferably 40 to 60 micrometers.

Preferably, monofunctional (meth)acrylates and multifunctional (meth)acrylates are used singly or in combination as a polymerizable monomer composition of the above ultraviolet-curing resin. Further, it is preferable to add a photopolymerization initiator or sensitizer. Japanese Unexamined Patent Publication Nos. 4 (1992)-30350 and 11 (1999)-269433 disclose preferable examples of the above compounds.

Alternatively, in the formation of the resin substrate 33 by the 2P method, the glass plate 10 obtained in the stage of Fig. 2D or the mother plate 13 obtained in the stage of Fig. 2E may be used as an original plate. The coating of the microrelief or microrecess pattern of the master medium 3, including the magnetic layer 32, is the same as the aforementioned case where the substrate is formed by injection molding.

### Young's Modulus of Substrate

Preferable ranges of the Young's modulus of the resin substrates 31 and 33 of the master mediums 3 are indicated below.

As explained before, in the magnetic transfer process, a magnetic layer 32 is formed on the resin substrate 31 or 33 which is produced by injection molding or the 2P method, and the master medium 3 is placed in close contact with a slave medium 2. In order to realize the close contact, the master medium 3 is pressed against the slave medium 2 by a force of 9.8 X 10⁻⁵ Pa or more. Therefore, when the magnetic transfer is made a number of times, the microrelief or microrecess pattern formed on the resin substrate 31 or 33 is damaged, and an error may be produced in the transferred signals. The applicant has made an experiment on the dependency of the damage in the pattern upon the Young's modulus. The result of the experiment is indicated in Table 1. As indicated in Table 1, the durability of the resin substrate is greatly increased when the Young's modulus is greater than a predetermined value. That is, the Young's modulus of the resin substrate or the resin portion of the master medium is preferably 1.5 X 10⁵ Pa or greater, and more preferably 2.5 X 10⁵ Pa or greater.

As mentioned before, the thickness of the resin substrate 31 produced by injection molding is preferably 0.3 to 1.2 mm (more preferably 0.5 to 1.0 mm), and the thickness of the resin substrate 33 produced by the 2P method is preferably 30 to 80 micrometers (more preferably 40 to 60 micrometers). In the case where the thickness of the resin substrate is below the above preferable range, the pattern formability decreases, and the resin is prone to damage when the resin substrate is removed from the original plate. In addition, in the case where the thickness of the resin substrate is above the preferable range, the resin substrate per se is likely to deform.

### Evaluation of Master Mediums

Table 1 indicates quality of signals transferred to and recorded in a slave medium, pattern formability in a large area, durability of the microrelief or microrecess pattern on the master medium in four concrete examples of the master mediums as the above embodiments and five other examples of master mediums produced for comparison. Table 1 also indicates the Young's modulus of the substrate in each example of the master medium.

The applicant has evaluated the quality of signals transferred to and recorded in a slave medium (hereinbelow called transferred signals), as follows.

First, a magnetic developer solution "Sigmarker Q" (manufactured by Sigma Hi-Chemical Inc., Japan) is diluted ten times, and dropped onto the slave medium after signals are magnetically transferred to the slave medium. Then, the magnetic developer solution on the slave medium is dried, and the quality of the transferred signals is evaluated based on variations of the edges of the transferred signals. Ten fields of view are observed under a differential interference microscope at magnification of 480X. A difference between the maximum observed line width Lx and the minimum observed line width Ln is obtained, and then a ratio of the difference and a target line width Ws is obtained. When the ratio is 3% or less, the quality of the transferred signals is determined to be good, and indicated with "O" in Table 1. When the ratio exceeds 3%, the quality of the transferred signals is determined not to be good, and indicated with "X" in Table 1.

The pattern formability in a large area is evaluated as follows.

Lines which have been transferred to and recorded in a slave medium are examined by using an electromagnetic-characteristic measurement apparatus SS-60 (manufactured by Kyodo Denshi System Co., Ltd., Japan) in the case where the lines extend radially, are spaced 0.5 micrometers apart at the radius of 20 mm, and each have a line width of 0.5 micrometers at the radius of 20 mm. An inductive head having a head gap of 0.23 micrometers and a track width of 3.0 micrometers is used to regenerate the signals. The regenerated signals are frequency-analyzed, and the peak line width W of the primary signal is measured. If the pattern formability deteriorates, and the line widths and the spaces between the lines vary, additional frequency components are generated, and the peak line width W increases. When the peak line width W is 0.2 MHz or less, the pattern formability is determined to be good, and indicated with "0" in Table 1. When the peak line width W exceeds 0.2 MHz, and does not exceed 0.5 MHz, the pattern formability is determined to be acceptable, and indicated with "Δ" in Table 1. When the peak line width W exceeds 0.5 MHz, the pattern formability is determined to be unacceptable, and indicated with "X" in Table 1.

The durability of the master medium is evaluated as follows.

After contact of the master medium to a slave medium under a contact pressure of 5 kg/cm² and separation from the slave medium are repeated a thousand times, fifty randomly selected fields of view of the surface of the master medium are observed under a differential interference microscope at magnification of 480X. When the number of abrasions and cracks found in the fifty fields of view is five or less, the durability of the master medium is determined to be good, and indicated with "O" in Table 1. When the number of abrasions and cracks found in the fifty fields of view exceeds five, the durability of the master medium is determined not to be good, and indicated with "X" in Table 1.

The Young's modulus is measured as follows.

A test piece of a resin substrate of which the Young's modulus is to be measured is prepared, where the size of the test piece is 5 X 30 mm. The test piece is set in a tensile testing machine, and elongation of the test piece is measured while imposing a load on the test piece. The load is increased until the relationship between the imposed load and the elongation of the test piece deviates from a straight line, and the Young's modulus is obtained based on the inclination of the straight line.

### Concrete Example 1

The master medium as the concrete example 1 is produced by forming a magnetic layer on a 3.5-inch polycarbonate disk. The 3.5-inch polycarbonate disk is a resin substrate produced by the process of Figs. 2A to 2I, and has a diameter of 3.5 inches. The magnetic layer has a thickness of 200 nm, and contains 50 atomic percent FeCo. The pattern formed on the polycarbonate disk includes lines radially extending in the radius range of 20 to 40 mm, and the lines are equally spaced, and each have a width of 10 micrometers. The spaces between adjacent ones of the lines are 10 micrometers at the radius of 20 mm (i.e., at the innermost position). The depth of the groove is 200 nm. The magnetic layer is formed by a direct-current (DC) sputtering method using the sputtering apparatus "730H" (manufactured by ANELVA Corporation, Japan). In the above process, the formation temperature is 25°C, the Ar sputtering pressure is 3.3 X 10⁻⁴ Pa (0.25 mTorr), and the input power is 2.54 W/cm². The magnetic transfer is made by using the above master medium, and the aforementioned evaluations are made. As a result, all of the quality of the transferred signals, the pattern formability in a large area, and the durability are confirmed good.

### Concrete Example 2

The master medium as the concrete example 2 is identical to the concrete example 1 except that each of the lines in the pattern has a width of 1 micrometer, and the spaces between adjacent ones of the lines are 1 micrometer at the radius of 20 mm (i.e., at the innermost position). The magnetic transfer is made by using the above master medium, and the aforementioned evaluations are made. As a result, all of the quality of the transferred signals, the pattern formability in a large area, and the durability are also confirmed good in the case of the finer pattern.

### Concrete Example 3

The master medium as the concrete example 3 is identical to the concrete example 1 except that each of the lines in the pattern has a width of 0.5 micrometers, and the spaces between adjacent ones of the lines are 0.5 micrometers at the radius of 20 mm (i.e., at the innermost position). The magnetic transfer is made by using the above master medium, and the aforementioned evaluations are made. As a result, all of the quality of the transferred signals, the pattern formability in a large area, and the durability are confirmed good in the case of the further finer pattern.

### Concrete Example 4

The master medium as the concrete example 4 is identical to the concrete example 1 except that the resin substrate is formed by the 2P method as illustrated in Figs. 3 and 4 using 2, 3-bis-acryloyloxyethyloxymethyl-bicyclo-[2, 2, 1] heptane ultraviolet-curing resin. The magnetic transfer is made by using the above master medium, and the aforementioned evaluations are made. As a result, the master medium as the concrete example 4 is found equal or superior to the master medium as the concrete example 1 in both of the quality of the transferred signals and the pattern formability in a large area. Further, the Young's modulus of the master medium as the concrete example 4 is greater than that of the master medium as the concrete example 1, and the master medium as the concrete example 4 is superior to the master medium as the concrete example 1 in durability.

### Comparison Example 1

The master medium as the comparison example 1 is produced as follows.

First, a magnetic layer is formed on a substrate made of a 3.5-inch silicon wafer (3.5-inch silicon disk), where the magnetic layer in the comparison example 1 is the same as the magnetic layer in the concrete example 1. Then, a photoresist is applied to the magnetic layer, and the photoresist is exposed by using masks corresponding to the same pattern as the concrete example 1. After development, portions of the magnetic layer are removed by etching so as to form the pattern.

The magnetic transfer is made by using the above master medium, and the aforementioned evaluations are made. As a result, all of the quality of the transferred signals, the pattern formability in a large area, and the durability are found good. However, the performance of the master mediums as the concrete examples 1 to 4 are equal or superior to that of the master medium produced by lithography.

### Comparison Example 2

The master medium as the comparison example 2 is produced in a similar way to the comparison example 1 except that the pattern formed on the master medium as the comparison example 2 is the same as the pattern of the aforementioned concrete example 2. The magnetic transfer is made by using the above master medium, and the aforementioned evaluations are made. As a result, it is found that the quality of the transferred signals and the durability are good. However, the pattern formability in a large area is not so good.

### Comparison Example 3

The master medium as the comparison example 3 is produced in a similar way to the comparison example 1 except that the pattern formed on the master medium as the comparison example 3 is the same as the pattern of the aforementioned concrete example 3. The magnetic transfer is made by using the above master medium, and the aforementioned evaluations are made. As a result, it is found that the quality of the transferred signals and the durability are good. However, the pattern formability in a large area in the comparison example 3 is worse than the comparison example 2.

### Comparison Example 4

The master medium as the comparison example 4 is produced in a similar way to the concrete example 1 except that the mother plate 13 obtained in the stage of Fig. 2E is used as the original plate. The magnetic transfer is made by using the above master medium, and the aforementioned evaluations are made. As a result, it is found that the master medium as the comparison example 4 is equal or superior to the concrete example 1 in each of the quality of the transferred signals, the pattern formability in a large area, and the durability. However, since a great number of resin substrates for the master medium as the concrete example 1 can be reproduced from one original plate, the production cost in the concrete example 1 can be greatly reduced.

### Comparison Example 5

The master medium as the comparison example 5 is produced in a similar way to the concrete example 1 except that the substrate is made of polypropylene. The magnetic transfer is made by using the above master medium, and the aforementioned evaluations are made. As a result, it is found that the master medium as the comparison example 4 is equal or superior to the concrete example 1 in the quality of the transferred signals and the pattern formability in a large area. However, since the Young's modulus of polypropylene is low, the durability of the master medium as the comparison example 5 is poor.

### Other matters

Although the above embodiments are explained based on the horizontal magnetic recording system, the present invention is also applicable to magnetic transfer in the vertical magnetic recording system.

**Table 1**

| | Young's modulus (Pa) | (Lx-Ln)/Ws (%) | W (MHz) | Durability |
|---|---|---|---|---|
| Concrete | 1.7 X10⁵ | 1.2 | 0.13 | 3 |
| Example 1 | | (O) | (0) | (O) |
| Concrete | 1.7 X10⁵ | 1.6 | 0.16 | 2 |
| Example 2 | | (O) | (O) | (O) |
| Concrete | 1.7 X10⁵ | 2.6 | 0.18 | 4 |
| Example 3 | | (O) | (O) | (O) |
| Concrete | 3.7 X10⁶ | 1.1 | 0.11 | 1 |
| Example 4 | | (O) | (O) | (O) |
| Comparison | 9.2 X10¹⁰ | 1.6 | 0.16 | 3 |
| Example 1 | | (O) | (O) | (O) |
| Comparison | 9.2 X10¹⁰ | 1.0 | 0.21 | 2 |
| Example 2 | | (O) | (Δ) | (O) |
| Comparison | 9.2 X10¹⁰ | 1.6 | 0.23 | 2 |
| Example 3 | | (O) | (Δ) | (O) |
| Comparison | 2.2 X10¹⁰ | 1.1 | 0.09 | 1 |
| Example 4 | | (O) | (O) | (O) |
| Comparison | 8.0 X10⁴ | 1.4 | 0.15 | 6 |
| Example 5 | | (O) | (O) | (X) |

## Claims

1. A master medium for use in magnetic transfer of information to a magnetic recording medium, comprising:
a substrate which is made of resin, and integrally molded with a microrelief or microrecess pattern being formed on a surface of the substrate and representing said information; and
a magnetic layer formed on said microrelief or microrecess pattern.

2. A master medium according to claim 1, wherein said substrate and said microrelief or microrecess pattern are formed by using an original plate having a microrecess or microrelief pattern.

3. A master medium according to claim 1, wherein said substrate and said microrelief or microrecess pattern are formed by a 2P method using an ultraviolet-curing resin and an original plate having a microrecess or microrelief pattern.

4. A master medium according to claim 1, wherein said information is a servo signal.

5. A process for magnetically transferring information from a master medium to a magnetic recording medium, comprising the steps of:
(a) performing an initial direct-current magnetization of said magnetic recording medium in a first direction;
(b) placing said master medium and said magnetic recording medium so that the magnetic recording medium is in contact with a magnetic layer formed on a microrelief or microrecess pattern of the master medium; and
(c) applying to said master medium a magnetic field in a second direction approximately opposite to said first direction;
said master medium comprises a substrate which is made of resin, and integrally molded with said microrelief or microrecess pattern.

6. A magnetic recording medium on which information is recorded, where the information is magnetically transferred from a master medium to the magnetic recording medium, the master medium comprises a substrate which is made of resin, and integrally molded with a microrelief or microrecess pattern, and the microrelief or microrecess pattern represents said information.
